# EUROPEAN PATENT SPECIFICATION

(11) **EP 4 177 126 B1**
(45) Date of publication and mention of the grant of the patent: **08.01.2025**
(21) Application number: 21206948.8
(22) Date of filing: 08.11.2021
(51) Int. Cl.: B60W 60/00, B60W 10/20, B60W 50/14, B60W 40/08

(54) **DRIVER CONTROLLING SYSTEM FOR A VEHICLE**
FAHRERSTEUERUNGSSYSTEM FÜR EIN FAHRZEUG
SYSTÈME DE SURVEILLANCE DE CONDUCTEUR POUR VÉHICULE

(43) Date of publication of application: 10.05.2023
(73) Proprietor: Volvo Car Corporation, 40531 Göteborg (SE)
(72) Inventor: KRAMPELL, Martin, 40531 Göteborg (SE); LÖFGREN, Markus, 40531 Göteborg (SE); CARLSSON, Andreas, 40531 Göteborg (SE); NORDSTROM, Jan, 40531 Göteborg (SE); VIKINGSSON, Terje, 40531 Göteborg (SE)
(74) Representative: Maiwald GmbH

(56) References cited:
- EP-A1- 3 795 441
- DE-A1- 102011 122 566
- DE-A1- 102012 206 725
- US-A1- 2018 365 533
- US-A1- 2021 129 861

## Description

### TECHNICAL FIELD

The present invention relates to a driver controlling system for a vehicle, a vehicle comprising such a driver controlling system, a driver controlling method for a vehicle and a computer program element for such a driver controlling system.

### BACKGROUND ART

As autonomous driving technology for vehicles improves, the vehicles take over operational decisions for the users and users travelling with such vehicles operate them more and more passively. Driver-assisted vehicles may provide a continuous assistance to the drivers such as speed control and/or steering assistance and the driver remains actively in the driving task. However, human performance degrades quickly beyond a certain level of automation of the vehicle. In other words, the better the autonomous driving technology becomes the worse capabilities of the drivers to react properly in a potentially critical situation.

There are some monitoring devices or methods to control an engagement of the driver. Among them, a torque- or capacitive-based hands-on wheel detection is commonly applied. However, such monitoring system is not sufficient to distinguish between an active driver and just one who rests their hand on the steering wheel. In addition, a camera-based driver monitoring device is also used, which assumes the driver's engagement if the driver looks out a windshield of the vehicle.

However, such monitoring devices monitor the driver in a passive way. Thus, they may not be able to detect an active engagement of the driver during driving a vehicle.

US 2021/0129861 A1 discloses a method comprising the steps of providing a human driver monitoring system and a human driver jolting system for a vehicle, using the human driver monitoring system to monitor a human driver for signs of inattentiveness to the task of driving the vehicle, and using the human driver jolting system to jolt the human driver.

### SUMMARY

Hence, there may be a need to provide an improved driver controlling system, which may monitor an active engagement of a driver during driving a vehicle.

The problem is at least partially solved or alleviated by the subject matter of the independent claims of the present invention, wherein further embodiments are incorporated in the dependent claims. It should be noted that the aspects of the invention described include the driver controlling system for a vehicle, the vehicle comprising such a driver controlling system, the driver controlling method for a vehicle and the computer program element for such a driver controlling system.

According to the present invention, a driver controlling system for a vehicle as defined in claim 1 is presented.

The driver controlling system according to the present invention allows to selectively altering characteristics or control of the vehicle to influence driver's engagement. Even an almost imperceptible small change can induce a significant effect to the driver during driving. In particular, by modifying at least one of the longitudinal adjustment parameter and the lateral adjustment parameter in the automated mode of the vehicle, the driver may perceive a deviation of a driving path and take over a physical control of the vehicle.

As autonomous driving technology for vehicles improves, drivers are generally no longer engaged in the driving and are therefore disconnected from a situation awareness perspective, but also from an ability of reacting to a critical situation. By maintaining the driver's engagement on a sufficient level, a degradation of human performance or control on the vehicle may be avoided. Accordingly, an optimal balance between function capabilities of the automated driving mode of the vehicle and maintaining a role of the driver as a supervisor may be achieved.

The driver controlling system may be a part of a driver assistance system, which may allow the vehicle to take over operational decisions during driving. The vehicle may drive in an automated mode, in which the vehicle provides a continuous assistance to the driver such as speed control and/or steering assistance and the driver remains actively in the supervising task. Alternatively, the vehicle may drive in an autonomous mode, in which the vehicle takes a full propulsion control. The driver controlling system may be suitable for an autonomous driving vehicle with a level between 0 and 4.

The longitudinal control means and the lateral control means may apply a wheel torque to control the vehicle in a longitudinal direction and a lateral direction, respectively. The longitudinal control means may be configured to control the vehicle in the longitudinal direction, i.e. parallel to a driving direction of the vehicle. The lateral control means may be configured to control the vehicle in the lateral direction, i.e. perpendicular to the driving direction of the vehicle.

The longitudinal control means may be configured for regulating a vehicle's cruise function such as cruise speed of the vehicle and/or inter-vehicular distance between two vehicles. The longitudinal control means may apply at least one longitudinal adjustment parameter to at least one propulsion actuator and/or a brake actuator to perform a longitudinal control. The longitudinal adjustment parameter may comprise at least one physical driving parameter of the vehicle to control the vehicle in the longitudinal direction. For instance, the longitudinal adjustment parameter may be related to a traction torque of the vehicle to adjust the driving vehicle in the longitudinal direction.

The lateral control means may be configured for a path tracking such as lane following, lane change maneuver, collision avoidance, etc. The lateral control means may apply at least one lateral adjustment parameter to at least one steering means of the vehicle. The lateral adjustment parameter may comprise at least one physical driving parameter of the vehicle to control the vehicle in the lateral direction. For instance, the lateral adjustment parameter may be related to a steering angle of the vehicle to adjust the driving vehicle in the lateral direction.

The control unit may be an electronic control unit (ECU) of the vehicle and configured to perform a powertrain control, brake control and/or transmission control. The control unit may be configured to receive, for instance environment data from at least one environment sensing device and/or a navigation device, and determine the longitudinal adjustment parameter for the longitudinal control and/or the lateral adjustment parameter for the lateral control of the vehicle to drive the vehicle at least partially or entirely in an automated driving mode. Additionally or alternatively, the determined longitudinal adjustment parameter and/or the determined lateral adjustment parameter may be based on a driving behavior of the driver.

The determined longitudinal adjustment parameter and/or the determined lateral adjustment parameter may be the optimal parameters to reliably and safely drive the vehicle in the automated mode. However, the control unit may slightly modify at least one of the determined longitudinal adjustment parameter and the determined lateral adjustment parameter by a predefined rate of deviation. The predefined rate of deviation may be for instance 0,5%, 1%, 5%, etc. Generally, vehicle drivers perceive even a very small change of a longitudinal driving control and/or a lateral driving control. Hence, the rate of deviation can be so small that it can just attract the driver's attention. However, it is important that the modified adjustment parameter(s) should still fulfill safety requirements of the vehicle driving in the automated mode.

Accordingly, the driver controlling system may induce an active reaction of the driver, who may try to adjust the modified adjustment parameter(s) to a familiar longitudinal adjustment parameter and/or a familiar lateral adjustment parameter, which may be the longitudinal adjustment parameter and/or a lateral adjustment parameter originally determined. As a result, an active engagement or supervision of the driver via a physical control during the automated driving mode may be realized.

In an example, the rate of deviation is inversely proportional to a time and/or a distance at which the modified longitudinal adjustment parameter and/or the modified lateral adjustment parameter is applied. In other words, the rate of deviation may increase if the modified longitudinal adjustment parameter and/or the modified lateral adjustment parameter is applied for a short time period and/or a short distance. Further, the rate of deviation may decrease if the modified longitudinal adjustment parameter and/or the modified lateral adjustment parameter is applied for a long time period and/or a long distance. Still in other words, a slow change of the adjustment parameter(s) over a longer time period or distance may be applied and a swift change of the adjustment parameter(s) over a short time period or distance may be applied for causing a reaction of the driver.

The rate of deviation for modification of the longitudinal adjustment parameter and/or the lateral adjustment parameter may be also influenced by a personal driving profile such as driving style, reactions to previous adjustments, hands on wheel detection, gaze direction and pattern, number of hands-off warnings, etc. In other words, the rate of deviation may be also based on the driver's behavior detected during driving.

In an example, the longitudinal adjustment parameter comprises at least one of a relative distance to a preceding vehicle, a relative speed to the preceding vehicle, a longitudinal acceleration rate and a longitudinal deceleration rate of the vehicle. In general, drivers are very sensitive to changes in longitudinal driving control such as accelerations or decelerations as small as ± 0,1 m² of acceleration. Thus, a utilization of the modified longitudinal adjustment parameter may be suitable for causing a reaction of the driver, since such a modification may be easily perceived by the driver.

The longitudinal adjustment parameter may be related to a movement of the vehicle parallel to a driving direction. If there is at least one preceding vehicle ahead, the distance between the current vehicle occupied by the driver and the preceding vehicle may be extended and/or shortened by accelerating or decelerating. Similarly, in case of a presence of the preceding vehicle, the relative speed between two vehicles may be increased or decreased by accelerating or decelerating.

However, if there is no preceding vehicle, the control unit may just modify a current speed of the vehicle by accelerating or decelerating by a predefined rate of deviation. Furthermore, in case of a cut-in or cut-out situation of the preceding vehicle the acceleration rate or the deceleration rate may be also modified. In addition, the longitudinal adjustment parameter may also comprise a cornering speed of the vehicle, which may be also modified for causing a reaction of the driver.

In an example, the lateral adjustment parameter comprises at least one of a position within a lane, an override torque, a steering wheel behavior, a lane change time, a curve entry and/or exit time, a lateral acceleration and a lateral deceleration of the vehicle. The lateral adjustment parameter may be related to a movement of the vehicle substantially perpendicular to the driving direction of the vehicle. The lateral adjustment parameter may be applied in the lateral control of the vehicle, for instance, controlling lateral acceleration, controlling lateral speed, changing a lane (lane change), turning, driving through a curve and/or overtaking another road user. The lateral adjustment parameter for the automated driving mode of the vehicle may be also determined based on the driver's behavior and/or driving preferences.

In an example, the control unit is configured to modify the lateral adjustment parameter of the automated mode by offsetting the position of the vehicle within the lane. If the driver prefers driving at a center of the lane, the lateral adjustment parameter defining a position of the vehicle within the lane may be set at a center of the lane in the automated driving mode. However, to cause a reaction of the driver, the control unit may modify the position of the vehicle such that the vehicle drives temporarily offset from the center of the lane. In contrast, if the driver prefers driving rather at an offset position from the center of the lane, the control unit may temporarily modify the lateral adjustment parameter such that the vehicle drives in the center of the lane to cause a reaction of the driver.

By applying a temporary offset to the vehicle in the lane, the driver may be nudged to correct the lateral control to a familiar drive path. When modifying the lateral adjustment parameter, however, it is important that the rate of deviation applied to shift the position of the vehicle may not exceed a limit at which the vehicle drives off-road. In other words, the modified lateral adjustment parameter may still allow the vehicle to drive within a lane fulfilling the safety requirements.

In an example, the control unit is configured to modify the lateral adjustment parameter of the automated mode by adjusting a safe control zone within the lane for causing a lateral drift and/or a nervous behavior of the steering wheel of the vehicle. The lane may comprise the safe control zone substantially around the center of the lane. The safe control zone may be defined by a bandwidth forming a safe corridor within the lane. The control unit may temporarily adapt the virtual bandwidth narrowly or broadly.

In particular, if the safe control zone becomes narrower, the vehicle may start to drift laterally, since the vehicle may leave the safe control zone easily. Additionally or alternatively, the behavior of steering wheel becomes nervous, since the vehicle may try to keep driving in the narrow safe control zone. The lateral drifting and/or the nervous steering wheel may awake the attention of the driver and prompt the driver to actively engage in the monitoring and/or supervision of the vehicle.

In an example, the control unit is configured to modify the lateral adjustment parameter of the automated mode by a late turn-in and/or oversteering out in a curve for changing a curve path. When driving the curve, the driver may tend to perceive a modification and/or a deviation of the lateral control of the vehicle more sensitively. For instance, the control unit may modify the lateral control such that the vehicle drive in the curve earlier or later than a usual driving in the automated mode and/or drive out from the curve earlier or later than the usual driving in the automated mode. Such modification may deviate the curve driving path from a familiar curve driving path, which may cause a physical control of the driver.

In an example, the driver controlling system further comprises a driver sensor unit configured to monitor the driver, whether the driver supervises the vehicle driving in the automated mode, and generate driver monitoring data. The driver sensor unit may be configured to monitor, whether the driver is paying attention to the road ahead and/or monitors surroundings of the driving path even in the automated driving mode of the vehicle. In an example, the driver monitoring data comprises at least one of steering wheel contact data and gaze data of the driver.

The driver sensor unit may comprise a hand-on wheel detection system comprising at least one capacitive sensor element and/or a torque sensor element. The hand-on wheel detection system may be configured to detect whether the driver holds the steering wheel and generate the steering wheel contact data accordingly. Additionally or alternatively, the driver sensor unit may comprise a camera-based driver monitoring system configured to capture at least one of gaze direction and gaze pattern of the driver. Particularly, the camera-based driver monitoring system may monitor, if the driver observes surroundings through a windshield of the vehicle and generate gaze data accordingly.

By implementing both of driver's physical control of the vehicle by modifying the longitudinal and/or the lateral adjustment parameter and monitoring of the driver's behavior in the driver controlling system, an active engagement of the driver in form of a human-automation interaction may be ensured.

In an example, the control unit is configured to vary the rate of deviation for modifying at least one of the longitudinal adjustment parameter and the lateral adjustment parameter of the automated mode based on the driver monitoring data. The control unit may be configured to receive the driver monitoring data comprising at least one of the steering wheel contact data and gaze data of the driver generated by the driver sensor unit and perform an assessment whether the driver actively supervises the vehicle, which is driving at least partially in the automated mode.

If the control unit determines that the driver does not sufficiently pay attention to the surroundings, the control unit may increase the rate of deviation. In contrast, if the control unit determines that the driver is sufficiently engaged in the monitoring of the surroundings and/or reacts to the modified longitudinal adjustment parameter and/or modified the lateral adjustment parameter properly, the control unit may decrease the rate of deviation. Accordingly, a dynamic monitoring of the driver may be realized.

In an example, the driver controlling system further comprises a user interface unit to generate a signal in case of no reaction of the driver to the modified longitudinal adjustment parameter and/or the modified lateral adjustment parameter. In case the control unit does not detect sufficient reaction or even any reaction of the driver to the modified the longitudinal adjustment parameter and/or the modified lateral adjustment parameter, the control unit may generate a warning signal to a user via a user interface device.

The warning signal may be a graphical signal, a light signal and/or a sound signal. The user interface unit may comprise for instance a graphical user interface element, which may be integrated in the vehicle, e.g. a Center Stack Display (CSD), an Infotainment Head Unit (IHU). Additionally or alternatively, the user interface unit may be integrated in an infotainment system of the vehicle.

In line with the invention, the control unit is configured to modify at least one of the longitudinal adjustment parameter and the lateral adjustment parameter prior to a maneuver required depending on a road situation undergoing in a change. The control unit may communicate with a navigation system, which may be arranged in the vehicle and configured to generate navigation data by calculating a route from a current position to a requested destination. The control unit may thus receive information about the forthcoming route. If the control unit identifies a need of a tactical maneuver based on the navigation data such as sharp curve, living street, lane change or merge, on- or off-ramp, or the like, the control unit may modify at least one of the longitudinal adjustment parameter and the lateral adjustment parameter for attracting the driver's attention as a reaction to the modified adjustment parameter(s).

Additionally or alternatively, the control unit may also alert the driver by modifying at least one of the longitudinal adjustment parameter and the lateral adjustment parameter in case of a heavy weather condition.

In an example, the control unit may modify at least one of the longitudinal adjustment parameter and the lateral adjustment parameter regularly in a predefined period and/or irregularly regardless of any external input such as driver monitoring data.

According to the present invention, a vehicle is presented. The vehicle comprises a driver controlling system as described above. The vehicle may be able to drive at least partially or entirely in an automated/autonomous driving mode. The vehicle comprising the driver controlling system may allow a driver to be engaged in a supervision of the driving by temporarily modifying at least one of the longitudinal adjustment parameter and the lateral adjustment parameter. Accordingly, a safe driving of the vehicle may be ensured.

According to the present invention, a driver controlling method for a vehicle as defined in claim 12 is presented. The longitudinal control means and the lateral control means are arrangeable in the vehicle.

According to the present invention, a computer program element is presented. The computer program element is configured for a driver controlling system as described above. The program element is adapted to perform the method steps as described above, when being executed by a processing element.

It should be noted that the above embodiments may be combined with each other irrespective of the aspect involved. Accordingly, the method may be combined with structural features and, likewise, the system may be combined with features described above with regard to the method.

These and other aspects of the present embodiments will become apparent from and elucidated with reference to the embodiments described hereinafter.

### BRIEF DESCRIPTION OF DRAWINGS

Exemplary embodiments will be described in the following with reference to the following drawings.
- Fig. 1: shows schematically and exemplarily an embodiment of a vehicle comprising the driver controlling system according to the present invention.
- Fig. 2a, 2b, 2c: show schematically and exemplarily an embodiment of a driver controlling method by modifying a longitudinal adjustment parameter according to the present invention.
- Fig. 3a, 3b, 3c: show schematically and exemplarily an embodiment of a driver controlling method by modifying a lateral adjustment parameter according to the present invention.

### DESCRIPTION OF EMBODIMENTS

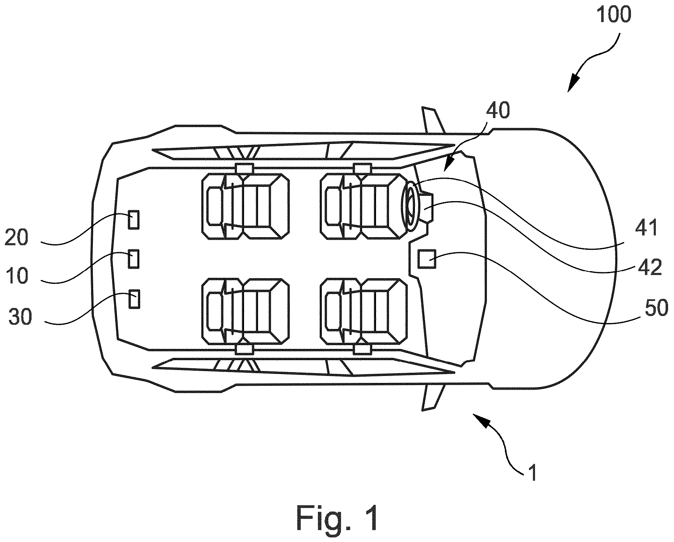

Fig. 1 shows a vehicle 100 comprising a driver controlling system 1. The vehicle 100 may be operated at least partially or entirely in an automated driving mode. The driver controlling system 1 is configured to monitor a driver, whether the driver actively supervises the automated driving mode of the vehicle 100. The driver controlling system 1 may be a part of a driver assistance system, which may allow the vehicle 100 to take over operational decisions during driving. The vehicle 100 in the automated mode provides a continuous assistance to the driver such as speed control and/or steering assistance and the driver remains actively in the supervising task.

The driver controlling system 1 comprises a longitudinal control means 10, a lateral control means 20 and a control unit 30. The longitudinal control means 10 and the lateral control means 20 are arranged in the vehicle 100. The control unit 30 is configured to determine at least one of a longitudinal adjustment parameter and a later adjustment parameter to propel the vehicle 100 in the automated mode. The longitudinal adjustment parameter comprises at least one of a relative distance to a preceding vehicle, a relative speed to the preceding vehicle, a longitudinal acceleration rate and a longitudinal deceleration rate of the vehicle 100. The lateral adjustment parameter comprises at least one of a position within a lane 200, an override torque, a steering wheel behavior, a lane change time, a curve entry and/or exit time, a lateral acceleration rate and a lateral deceleration rate of the vehicle 100.

The longitudinal control means 10 is configured to receive the longitudinal adjustment parameter determined by the control unit 30 and apply it in the automated mode of the vehicle 100. The lateral control means 20 is configured to receive the lateral adjustment parameter determined by the control unit 30 and apply it in the automated mode of the vehicle 100. The longitudinal control means 10 may be configured for regulating a vehicle's cruise function such as cruise speed of the vehicle 100 and/or inter-vehicular distance between two vehicles. The lateral control means 20 may be configured for a path tracking such as lane following, lane change maneuver, collision avoidance, etc.

The driver controlling system 1 further comprises a driver sensor unit 40 configured to monitor the driver, whether the driver supervises the vehicle 100 driving in the automated mode, and generate driver monitoring data. The driver monitoring data comprises at least one of steering wheel contact data and gaze data of the driver.

The driver sensor unit 40 comprises a hand-on wheel detection system 41 comprising at least one capacitive sensor element and a torque sensor element. The hand-on wheel detection system 41 is configured to detect whether the driver holds the steering wheel and generate accordingly the steering wheel contact data. Additionally or alternatively, the driver sensor unit 40 comprises a camera-based driver monitoring system 42 configured to capture at least one of a gaze direction and a gaze pattern of the driver. Particularly, the camera-based driver monitoring system 42 may monitor, if the driver observes surroundings through a windshield of the vehicle 100 and generate accordingly gaze data.

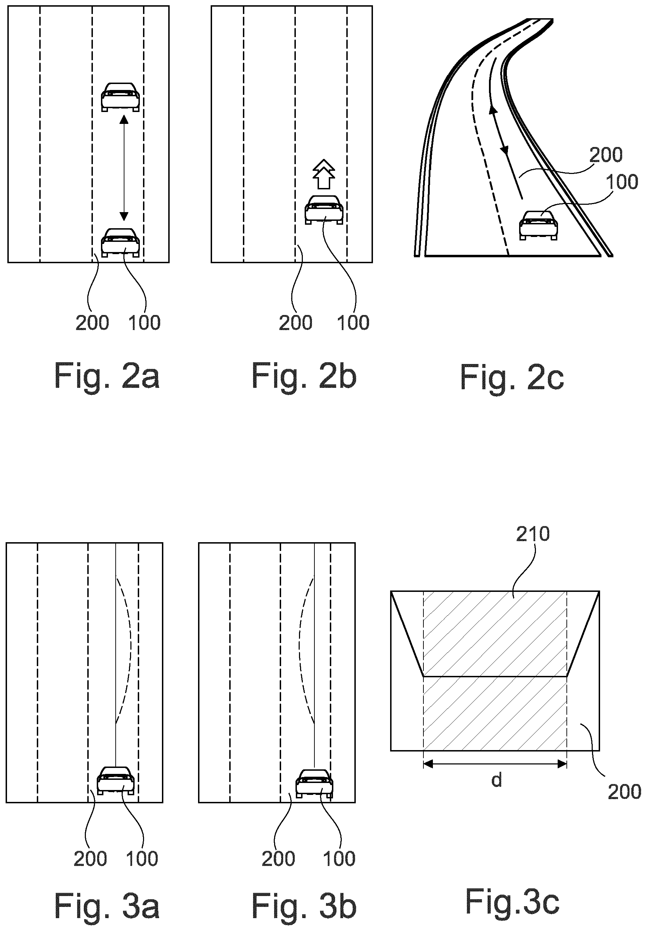

The control unit 30 may be an electronic control unit (ECU) of the vehicle 100 and configured to perform a powertrain control, brake control and/or transmission control. The control unit 30 is configured to modify at least one of the longitudinal adjustment parameter and the lateral adjustment parameter to be applied in the vehicle 100 by a predefined rate of deviation for causing a reaction of the driver. The rate of deviation can be so small that it can just attract the driver's attention. It is important that the modified adjustment parameter(s) should still fulfill safety requirements of the vehicle 100 driving in the automated mode (see also Fig. 2 and Fig. 3).

The rate of deviation is inversely proportional to a time and/or a distance at which the modified longitudinal adjustment parameter and/or the modified lateral adjustment parameter is applied. For instance, the rate of deviation may increase if the modified longitudinal adjustment parameter and/or the modified lateral adjustment parameter is applied for a short time period and/or a short distance.

The control unit 30 is further configured to modify at least one of the longitudinal adjustment parameter and the lateral adjustment parameter prior to a maneuver required depending on a road situation undergoing in a change. Additionally or alternatively, the control unit 30 may modify at least one of the longitudinal adjustment parameter and the lateral adjustment parameter regularly in a predefined period and/or irregularly regardless of any external input such as driver monitoring data.

The control unit 30 is further configured to vary the rate of deviation for modifying at least one of the longitudinal adjustment parameter and the lateral adjustment parameter of the automated mode based on the driver monitoring data. For instance, if the control unit 30 determines that the driver does not sufficiently pay attention to the surroundings, the control unit 30 may increase the rate of deviation.

The driver controlling system 1 further comprises a user interface unit 50 to generate a signal in case of insufficient or no reaction of the driver to the modified longitudinal adjustment parameter and/or the modified lateral adjustment parameter. The user interface unit 50 may comprise for instance a graphical user interface element, which may be integrated in the vehicle 100, e.g. a Center Stack Display (CSD), an Infotainment Head Unit (IHU). Additionally or alternatively, the user interface unit 50 may be integrated in an infotainment system of the vehicle 100.

Fig. 2a, Fig. 2b and Fig. 2c show a vehicle 100 driving with at least one modified longitudinal adjustment parameter. The control unit 30 of the driver controlling system 1 may temporarily modify the longitudinal adjustment parameter to cause a reaction of the driver. If there is at least one preceding vehicle 100 ahead, a distance between the current vehicle 100 occupied by the driver and the preceding vehicle may be extended and/or shortened by accelerating or decelerating the vehicle 100. Similarly, in case of a presence of the preceding vehicle 100, a relative speed between two vehicles may be increased or decreased by accelerating or decelerating the vehicle 100 (see Fig. 2a).

However, if there is no preceding vehicle, the control unit 30 may just modify a current speed of the vehicle 100 by accelerating or decelerating by a predefined rate of deviation (see Fig. 2b). Furthermore, in case of a cut-in or cut-out situation of the preceding vehicle 100 the acceleration rate or the deceleration rate may be also modified. In addition, the longitudinal adjustment parameter may also comprise a cornering speed of the vehicle 100, which may be modified for causing a reaction of the driver (see Fig. 2c).

Fig. 3a, Fig. 3b and Fig. 3c show a vehicle 100 driving with at least one modified lateral adjustment parameter. The control unit 30 of the driver controlling system 1 may temporarily modify the lateral adjustment parameter to cause a reaction of the driver.

In particular, the control unit 30 is configured to modify the lateral adjustment parameter of the automated mode by offsetting the position of the vehicle 100 within a lane 200. If the driver prefers driving at a center of the lane 200 or the vehicle 100 drives at the center of the lane 200 in an automated driving mode, the lateral adjustment parameter for the position of the vehicle 100 can be modified with an offset from the center of the lane 200 (see Fig. 3a). However, if the driver prefers driving rather at an offset position from the center of the lane 200 or the vehicle 100 drives at an offset position from the center of the lane 200 in the automated driving mode, the lateral adjustment parameter can be temporarily modified such that the vehicle 100 drives in the center of the lane 200 to cause a reaction of the driver (see Fig. 3b).

The control unit 30 is further configured to modify the lateral adjustment parameter of the automated mode by adjusting a safe control zone 210 within the lane 200 for causing a lateral drift and/or a nervous behavior of the steering wheel of the vehicle 100 (see Fig. 3c). The safe control zone 210 may be defined by a bandwidth d forming a safe corridor within the lane 200. The control unit 30 may temporarily adapt the virtual bandwidth d narrowly or broadly. For instance, if the safe control zone 210 becomes narrower, the vehicle 100 may start to drift laterally, since the vehicle 100 may leave the safe control zone 210 easily. Additionally or alternatively, the behavior of steering wheel can become nervous, since the vehicle 100 may try to keep driving in the narrow safe control zone 210.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the invention, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A driver controlling system (1) for a vehicle (100), comprising
- a longitudinal control means (10),
- a lateral control means (20), and
- a control unit (30),
the longitudinal control means (10) and the lateral control means (20) being arrangeable in the vehicle (100),
the control unit (30) being configured to determine at least one of a longitudinal adjustment parameter and a lateral adjustment parameter to propel the vehicle (100) in an automated mode,
the control unit (30) being configured to prompt the longitudinal control means (10) to apply the longitudinal adjustment parameter of the vehicle and/or the lateral control means (20) to apply the lateral adjustment parameter in the automated mode,
the control unit (30) being further configured to modify at least one of the longitudinal adjustment parameter and the lateral adjustment parameter to be applied in the vehicle (100) by a predefined rate of deviation for causing a reaction of the driver,
the rate of deviation for modifying the longitudinal adjustment parameter and/or the lateral adjustment parameter being in inverse proportional to a time and/or a distance to be applied, and
the control unit (30) being configured to modify at least one of the longitudinal adjustment parameter and the lateral adjustment parameter prior to a maneuver required depending on a road situation undergoing in a change.

2. The driver controlling system (1) according to claim 1, the longitudinal adjustment parameter comprising at least one of a relative distance to a preceding vehicle, a relative speed to the preceding vehicle, a longitudinal acceleration rate and a longitudinal deceleration rate of the vehicle (100).

3. The driver controlling system (1) according to claim 1, the lateral adjustment parameter comprising at least one of a position within a lane (200), an override torque, a steering wheel behavior, a lane change time, a curve entry time, a curve exit time, a lateral acceleration rate and a lateral deceleration rate of the vehicle (100).

4. The driver controlling system (1) according to claim 3, the control unit (30) being configured to modify the lateral adjustment parameter of the automated mode by offsetting the position of the vehicle (100) within the lane (200).

5. The driver controlling system (1) according to claim 3 or 4, the control unit (30) being configured to modify the lateral adjustment parameter of the automated mode by adjusting a safe control zone (210) within the lane (200) for causing a lateral drift and/or a nervous behavior of the steering wheel of the vehicle (100).

6. The driver controlling system (1) according to any of the preceding claims 3 to 5, the control unit (30) being configured to modify the lateral adjustment parameter of the automated mode by a late turn-in and/or oversteering out in a curve for changing a curve path.

7. The driver controlling system (1) according to any of the preceding claims, further comprising a driver sensor unit (40), the driver sensor unit (40) being configured to monitor the driver, whether the driver supervises the vehicle (100) driving in the automated mode, and generate driver monitoring data.

8. The driver controlling system (1) according to claim 7, the control unit (30) being configured to vary the rate of deviation for modifying at least one of the longitudinal adjustment parameter and the lateral adjustment parameter of the automated mode based on the driver monitoring data.

9. The driver controlling system (1) according to claim 7 or 8, the driver monitoring data comprises at least one of steering wheel contact data and gaze data of the driver.

10. The driver controlling system (1) according to any of the preceding claims, further comprising a user interface unit (50) to generate a signal in case of no reaction of the driver to the modified longitudinal adjustment parameter and/or the modified lateral adjustment parameter.

11. A vehicle (100) comprising a driver controlling system (1) according to any of the preceding claims 1 to 10.

12. A driver controlling method for a vehicle (100), comprising
- determining at least one of a longitudinal adjustment parameter and a lateral adjustment parameter to propel the vehicle (100) in an automated mode,
- applying at least one of the longitudinal adjustment parameter and the lateral adjustment parameter in the automated mode, and
- modifying at least one of the longitudinal adjustment parameter and the lateral adjustment parameter of the automated mode to be applied in the vehicle by a predefined rate of deviation for causing a reaction of the driver,
a longitudinal control means (10) and a lateral control means (20) being arrangeable in the vehicle (100),
the rate of deviation for modifying the longitudinal adjustment parameter and/or the lateral adjustment parameter being in inverse proportional to a time and/or a distance to be applied,
wherein
the modifying of at least one of the longitudinal adjustment parameter and the lateral adjustment parameter is carried out prior to a maneuver required depending on a road situation undergoing in a change.

13. A computer program element, for a driver controlling system (1) according to claims 1 to 10, which, when being executed by a processing element, being adapted to perform the method steps of the method claim 12.

## Patentansprüche

1. Fahrerkontrollsystem (1) für ein Fahrzeug (100), umfassend
- eine Längssteuerungseinrichtung (10),
- eine Quersteuerungseinrichtung (20) und
- eine Steuereinheit (30),
die Längssteuerungseinrichtung (10) und die Quersteuerungseinrichtung (20) in dem Fahrzeug (100) angeordnet werden können,
die Steuereinheit (30) so ausgelegt ist, dass sie mindestens einen Längsverstellparameter und einen Querverstellparameter bestimmt, um das Fahrzeug (100) in einem automatisierten Modus anzutreiben,
die Steuereinheit (30) so ausgelegt ist, dass sie die Längssteuereinrichtung (10) auffordert, den Längsverstellparameter des Fahrzeugs und/oder die Quersteuereinrichtung (20) auffordert, den Querverstellparameter in dem automatisierten Modus anzuwenden,
die Steuereinheit (30) ferner so ausgelegt ist, dass sie den Längsverstellparameter und/oder den Querverstellparameter, die auf das Fahrzeug (100) anzuwenden sind, durch eine vorgegebene Abweichungsrate modifiziert, um eine Reaktion des Fahrers hervorzurufen,
die Abweichungsrate zum Ändern des Längsverstellparameters und/oder des Querverstellparameters umgekehrt proportional zu einer Zeit und/oder einer Distanz ist, die angewendet werden sollen, und
die Steuereinheit (30) dazu eingerichtet ist, den Längsverstellparameter und/oder den Querverstellparameter vor einem Manöver zu ändern, das in Abhängigkeit von einer sich ändernden Straßensituation erforderlich ist.

2. Fahrerkontrollsystem (1) nach Anspruch 1, wobei der Längsverstellparameter umfasst mindestens einen von einem relativen Abstand zu einem vorausfahrenden Fahrzeug, einer relativen Geschwindigkeit zum vorausfahrenden Fahrzeug, eine Längsbeschleunigungsrate und eine Längsverzögerungsrate des Fahrzeugs (100).

3. Fahrerkontrollsystem (1) nach Anspruch 1, wobei der Querverstellparameter umfasst mindestens einen der Position innerhalb einer Fahrspur (200), Übersteuerungsmoment, Lenkradverhalten, Spurwechselzeit, Kurveneingangszeit, Kurvenausgangszeit, Querbeschleunigungsrate und Querverzögerungsrate des Fahrzeugs (100).

4. Fahrerkontrollsystem (1) nach Anspruch 3, wobei die Steuereinheit (30) konfiguriert ist um den Querverstellparameter des automatisierten Modus zu ändern, indem die Position des Fahrzeugs (100) innerhalb der Fahrspur (200) verschoben wird.

5. Fahrerkontrollsystem (1) nach Anspruch 3 oder 4, wobei die Steuereinheit (30) so konfiguriert ist, dass sie den Querverstellparameter des automatisierten Modus modifiziert, indem sie eine sichere Kontrollzone (210) innerhalb der Fahrspur (200) einstellt, um eine seitliche Abweichung und/oder ein nervöses Verhalten des Lenkrads des Fahrzeugs (100) zu bewirken.

6. Fahrerkontrollsystem (1) nach einem der vorhergehenden Ansprüche 3 bis 5, wobei die Steuereinheit (30) konfiguriert ist, den Querverstellparameter des automatisierten Modus durch ein spätes Einlenken und/oder Übersteuern in einer Kurve zur Änderung des Kurvenverlaufs zu modifizieren.

7. Fahrerkontrollsystem (1) nach einem der vorhergehenden Ansprüche, das ferner eine Fahrersensoreinheit (40) umfasst, wobei die Fahrersensoreinheit (40) dazu konfiguriert ist, den Fahrer zu überwachen, ob der Fahrer das im automatisierten Modus fahrende Fahrzeug (100) überwacht, und Fahrerüberwachungsdaten zu erzeugen.

8. Fahrerkontrollsystem (1) nach Anspruch 7, wobei die Steuereinheit (30) so konfiguriert ist, dass sie die Abweichungsrate variiert, um mindestens einen der Längsverstellparameter und der Querverstellparameter des automatisierten Modus auf der Grundlage der Fahrerüberwachungsdaten zu ändern.

9. Fahrerkontrollsystem (1) nach Anspruch 7 oder 8, wobei die Fahrerüberwachungsdaten mindestens eines von Lenkradkontaktdaten und Blickdaten des Fahrers umfassen.

10. Fahrerkontrollsystem (1) nach einem der vorhergehenden Ansprüche umfasst ferner eine Benutzerschnittstelleneinheit (50), um ein Signal zu erzeugen, falls der Fahrer keine Reaktion auf den geänderten Längsverstellparameter und/oder den geänderten Querverstellparameter zeigt.

11. Fahrzeug (100) umfassend ein Fahrerkontrollsystem (1) nach einem der vorhergehenden Ansprüche 1 bis 10.

12. Fahrerkontrollverfahren für ein Fahrzeug (100), umfassend
- das Bestimmen mindestens eines von einem Längsverstellparameter und einem Querverstellparameter, um das Fahrzeug (100) in einem automatisierten Modus anzutreiben,
- das Anwenden mindestens eines von dem Längsverstellparameter und dem Querverstellparameter in dem automatisierten Modus, und
- das Modifizieren mindestens eines von dem Längsverstellparameter und dem Querverstellparameter des automatisierten Modus, der in dem Fahrzeug anzuwenden ist, durch eine vorgegebene Abweichungsrate, um eine Reaktion des Fahrers zu bewirken,
eine Längssteuerungseinrichtung (10) und eine Quersteuerungseinrichtung (20) in dem Fahrzeug (100) anordenbar sind,
die Abweichungsrate zum Ändern des Längsverstellparameters und/oder des Querverstellparameter umgekehrt proportional zu einer Zeit und/oder einer anzuwendenden Strecke ist, wobei
das Ändern von mindestens einem des Längsverstellparameters und des Querverstellparameter vor einem Manöver ausgeführt wird, das in Abhängigkeit von einer sich ändernden Straßensituation erforderlich ist.

13. Computerprogrammelement für ein Fahrerkontrollsystem (1) nach den Ansprüchen 1 bis 10, das bei der Ausführung durch ein Verarbeitungselement dazu eingerichtet ist, die Verfahrensschritte des Verfahrensanspruchs 12 durchzuführen.

## Revendications

1. Système de contrôle de conducteur (1) pour un véhicule (100), comprenant :
- des moyens de commande longitudinale (10),
- des moyens de commande latérale (20) et
- une unité de commande (30),
les moyens de commande longitudinale (10) et les moyens de commande latérale (20) pouvant être agencés dans le véhicule (100),
l'unité de commande (30) étant configurée pour déterminer au moins un parmi un paramètre de réglage longitudinal et un paramètre de réglage latéral pour propulser le véhicule (100) dans un mode automatisé,
l'unité de commande (30) étant configurée pour amener les moyens de commande longitudinale (10) à appliquer le paramètre de réglage longitudinal du véhicule et/ou les moyens de commande latérale (20) à appliquer le paramètre de réglage latéral dans le mode automatisé,
l'unité de commande (30) étant en outre configurée pour modifier au moins un parmi le paramètre de réglage longitudinal et le paramètre de réglage latéral à appliquer dans le véhicule (100) d'un taux de déviation prédéfini pour entraîner une réaction du conducteur,
le taux de déviation destiné à modifier le paramètre de réglage longitudinal et/ou le paramètre de réglage latéral étant inversement proportionnel à un temps et/ou à une distance à appliquer, et
l'unité de commande (30) étant configurée pour modifier au moins un parmi le paramètre de réglage longitudinal et le paramètre de réglage latéral avant une manoeuvre requise en fonction d'une situation de route subissant un changement.

2. Système de contrôle de conducteur (1) selon la revendication 1, le paramètre de réglage longitudinal comprenant au moins un parmi une distance relative par rapport à un véhicule précédent, une vitesse par rapport au véhicule précédent, une vitesse d'accélération longitudinale et une vitesse de décélération longitudinale du véhicule (100).

3. Système de contrôle de conducteur (1) selon la revendication 1, le paramètre de réglage latéral comprenant au moins un parmi une position à l'intérieur d'une voie (200), un couple de surpassement, un comportement de volant de direction, un temps de changement de voie, un temps d'entrée dans un virage, un temps de sortie de virage, une vitesse d'accélération latérale, et une vitesse de décélération latérale du véhicule (100).

4. Système de contrôle de conducteur (1) selon la revendication 3, l'unité de commande (30) étant configurée pour modifier le paramètre de réglage latéral du mode automatisé en décalant la position du véhicule (100) à l'intérieur de la voie (200).

5. Système de contrôle de conducteur (1) selon la revendication 3 ou 4, l'unité de commande (30) étant configurée pour modifier le paramètre de réglage latéral du mode automatisé en réglant une zone de commande sûre (210) à l'intérieur de la voie (200) pour entraîner une dérive latérale et/ou un comportement nerveux du volant de direction du véhicule (100).

6. Système de contrôle de conducteur (1) selon l'une quelconque des revendications 3 à 5 précédentes, l'unité de commande (30) étant configurée pour modifier le paramètre de réglage latéral du mode automatisé par un virage tardif et/ou un survirage dans un virage pour changer une trajectoire de virage.

7. Système de contrôle de conducteur (1) selon l'une quelconque des revendications précédentes, comprenant en outre une unité de capteur de conducteur (40), l'unité de capteur de conducteur (40) étant configurée pour surveiller le conducteur, si le conducteur supervise le véhicule (100) conduisant dans le mode automatisé, et générer des données de surveillance de conducteur.

8. Système de contrôle de conducteur (1) selon la revendication 7, l'unité de commande (30) étant configurée pour faire varier le taux de déviation pour modifier au moins un parmi le paramètre de réglage longitudinal et le paramètre de réglage latéral du mode automatisé sur la base des données de surveillance de conducteur.

9. Système de contrôle de conducteur (1) selon la revendication 7 ou 8, les données de surveillance de conducteur comprenant au moins un parmi des données de contact de volant de direction et des données concernant le regard du conducteur.

10. Système de contrôle de conducteur (1) selon l'une quelconque des revendications précédentes, comprenant en outre une unité d'interface utilisateur (50) pour générer un signal en cas d'absence de réaction du conducteur au paramètre de réglage longitudinal modifié et/ou au paramètre de réglage latéral modifié.

11. Véhicule (100) comprenant un système de contrôle de conducteur (1) selon l'une quelconque des revendications 1 à 10 précédentes.

12. Procédé de contrôle de conducteur pour un véhicule (100), comprenant de :
- déterminer au moins un parmi un paramètre de réglage longitudinal et un paramètre de réglage latéral pour propulser le véhicule (100) dans un mode automatisé,
- appliquer au moins un parmi le paramètre de réglage longitudinal et le paramètre de réglage latéral dans le mode automatisé, et
- modifier au moins un parmi le paramètre de réglage longitudinal et le paramètre de réglage latéral du mode automatisé à appliquer dans le véhicule d'un taux de déviation prédéfini pour entraîner une réaction du conducteur,
des moyens de commande longitudinale (10) et des moyens de commande latérale (20) pouvant être agencés dans le véhicule (100),
la vitesse de déviation pour modifier le paramètre de réglage longitudinal et/ou le paramètre de réglage latéral étant inversement proportionnel à un temps et/ou à une distance à appliquer,
dans lequel
la modification d'au moins un parmi le paramètre de réglage longitudinal et le paramètre de réglage latéral est effectuée avant une manoeuvre requise en fonction d'une situation de route subissant un changement.

13. Élément de programme informatique pour un système de contrôle de conducteur (1) selon les revendications 1 à 10 qui, lorsqu'il est exécuté par un élément de traitement, est adapté pour mettre en oeuvre les étapes de procédé de l'étape de procédé 12.
